# EUROPEAN PATENT SPECIFICATION

(11) **EP 1 554 608 B1**
(45) Date of publication and mention of the grant of the patent: **16.07.2008**
(21) Application number: 03780163.6
(22) Date of filing: 07.10.2003
(51) Int. Cl.: G01V 1/38

(54) **MULTI-PART SEISMIC CABLE**
MEHRTEILIGES SEISMISCHES KABEL
CABLE SISMIQUE A PLUSIEURS PARTIES

(30) Priority: 12.10.2002 GB 0223842
(43) Date of publication of application: 20.07.2005
(73) Proprietor: SERVICES PETROLIERS SCHLUMBERGER, 75007 Paris (FR)
(72) Inventor: GOUJON, Nicolas, N-0478 Oslo (NO); NAES, Johan, Fredrick, N-1395 Hvalstad (NO); VOLDSBEKK, Rune, N-3046 Drammen (NO)
(74) Representative: Suckling, Andrew Michael
(86) International application number: PCT/EP2003/050702
(87) International publication number: WO 2004/036252

(56) References cited:
- US-A- 2 923 916
- US-A- 3 372 368
- US-A- 4 313 392
- US-A- 4 398 276
- US-A- 4 884 249

## Description

### 1. FIELD OF THE INVENTION

This invention relates generally to seismic cable systems, and, more particularly, to a robust and reliable seismic cable system.

### 2. DESCRIPTION OF THE RELATED ART

Subsurface hydrocarbon accumulations are increasingly found in geologically complex areas. The ability to conduct accurate seismic surveys may help improve the discovery rates and even the production of such accumulations. Seismic surveying is a method of stimulating a geological subsurface formation with, e.g., electrical, magnetic, and/or acoustic signals to acquire seismic data about the formation. From this data, one can predict tell whether the formation contains hydrocarbon deposits and, if so, where.

One type of seismic survey is generally referred to as a "marine" survey because it is typically conducted at sea, although this is not necessarily always the case. During marine seismic surveys, seabed seismic cable systems are deployed to the bed of a sea, lake, river, or marsh. The water depth may range from several thousand meters up to the water/land transition zone. Water currents of considerable speed may pass over the cable system and create instability and deterioration of the seismic data quality.

Seabed seismic cable systems generally are designed to meet two conflicting goals. First, the cable system must be robust and resistant to damage. For example, the cable system must survive and operate at great water depth. Also, the cable system may be roughly handled during deployment and retrieval. Second, the cable system should be sensitive to acoustic vibrations and not compromise the quality of data recorded by the sensor units.

Although there are several types of seabed seismic cables, there are generalities in construction. A seabed seismic cable includes three main elements: stress members, leads, and a sheath. One or several stress members take the tension that can be applied to the seabed seismic cable during deployment and retrieval operations to protect other elements of the cable. The leads, which may be electrical or optical, transmit power and/or data, in analog or digital format, along the cable for collection and processing, *e.g*., on a survey vessel. The sheath is a skin, jacket or extrusion matrix protecting the seabed seismic cable against, notably, water ingress.

One type of seabed cable is known as an "ocean bottom cable" ("OBC"), and is typically equipped with "takeouts." A full length of conventional OBC is seismic built, the jacket is then opened at the location were the sensors are located, and leads are extracted from the cable to form a take-out and connected to the sensors. The sensors are then attached to the cable.

These types of cable are prone to water intrusion, electrical leakage, and wire kinking, as the take-outs are submitted to a high level of strain during cable handling. These cables usually have an asymmetric cross-section at the sensors, and the response will change depending on how the sensors rest on the seafloor. These types of cables also expose the seismic receivers and the takeouts to a number potentially damaging obstacles on the seabed, thereby reducing the reliability of the collected data. Furthermore, because the takeouts are extracted from the cable and not a separate component, the entire cable may need to be replaced if the takeouts are damaged, which can be expensive and time-consuming.

Improvements to this type of apparatus appear in U.S. Patent No. 6,294,727 to Orlean, which provides for an "overmolding" of the cable and the sensor units. Improvements also appear in U.S. Patent and 6,333,898 to Knudsen et al. and U.S. Patent No. 6,041,282 to Wardeberg et al. (collective referred as "steel armored cables"), which provide for a preparation of steel armored cable without takeouts. However, the Orlean and steel armored cables still suffer from the drawbacks mentioned above, including water intrusion, electrical leakage, and wire-kinking. Furthermore, the Orlean and steel armored cables usually suffer from the asymmetric cross-section at the sensor units.

Another type of seabed seismic cable system is commonly referred to as a logging type cable. Logging type cables typically have a full electrical/optical termination at each sensor unit, resulting in a high number of connection points. The high number of connection points negatively impacts the cable's reliability. Furthermore, the increased number of terminations makes the sensor unit large and heavy, which negatively impacts data quality.

Yet another type of seabed seismic cable system comprises conventional cables with sensor units integrated inside a protective cable jacket. One variation is known as a "streamer type" cable. The streamer type cable is an evolution of a towed seismic streamer for deployment on the seabed. The streamer type cable comprises spacers, sensor units, and a filler, which usually is oil. The streamer type cable has a constant diameter and therefore occupies a large volume when stored. An alternative variation is known as a "solid cable." One example of the solid cable is shown in U.S. Patent No. 6,333,897 to Knudsen et al., which can be produced with a constant diameter or a variable diameter. Both the constant diameter and the variable diameter cables pose potentially serious drawbacks. The cable with a constant diameter is extremely large, heavy and stiff. The cable with a variable diameter is difficult to manufacture.

US patent No. 2 923 916 discloses a seismic system in which a plurality of clusters of seismic detectors are attached to a "main cable". The clusters of seismic detectors are also coupled in series by segments of a further cable. The further cable is attached to the main cable only at one point, near the towing vessel.

US patent No. 3 372 368 relates to a sonar array for the detection of submarines. It is directed to a hydrophone array in which the hydrophones are arranged, as nearly as possible, vertically above one another. The hydrophone array has a main tension cable, and a plurality of hydrophones are attached to the main tension cable by a truss arrangement of streamers and spacers at discrete tie points.

US patent No. 4 398 276 discloses a geophone array in which a number of land-based sensors are each provided with a ring member, and a line is passed through the ring members of all the sensors. The line is used to pull the sensors out of the ground once a survey has been completed.

US patent No. 4 884 249 discloses a marine streamer in which a floating buoyancy member is attached to an active streamer by suspension ropes.

The present invention is directed to overcoming, or at least reducing the effects of, one or more of the problems set forth above.

### SUMMARY OF THE INVENTION

The invention comprises a seismic cable and a method for assembling such a seismic cable. The apparatus comprises seismic cable including a tension support cable capable of absorbing tension during deployment of the seismic cable and a signal cable attached to the support cable at a plurality of first points spaced along the length of the signal cable. The seismic cable also includes at least one sensor module disposed on the signal cable proximate a second point different from the first points. The method includes attaching a tension support cable capable of absorbing tension during deployment of the seismic cable to a signal cable at a plurality of first points spaced along the length thereof, the plurality of first points differing from at least one second point of attachment for at least one sensor module.

### BRIEF DESCRIPTION OF THE DRAWINGS

The invention may be understood by reference to the following description taken in conjunction with the accompanying drawings, in which like reference numerals identify like elements, and in which:
**FIG. 1** illustrates a seismic survey vessel from which a seismic cable constructed and operated in accordance with the present invention is deployed;
**FIG. 2A** to **FIG. 2C** illustrate a first embodiment of the seismic cable of **FIG. 1** in accordance with the present invention wherein:

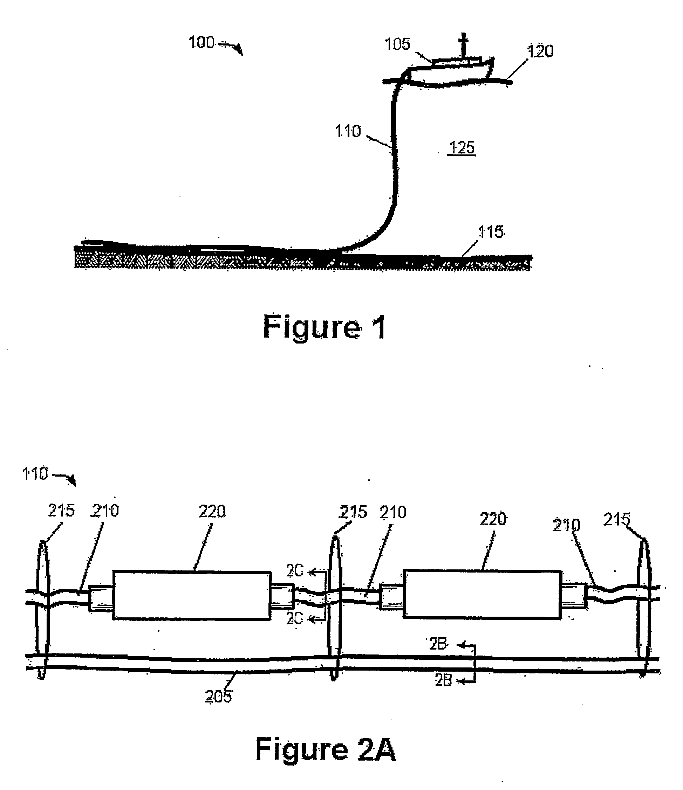

   **·** **FIG. 2A** illustrates in a partially sectioned view of the seismic cable of **FIG. 1**, in accordance with one embodiment of the present invention;

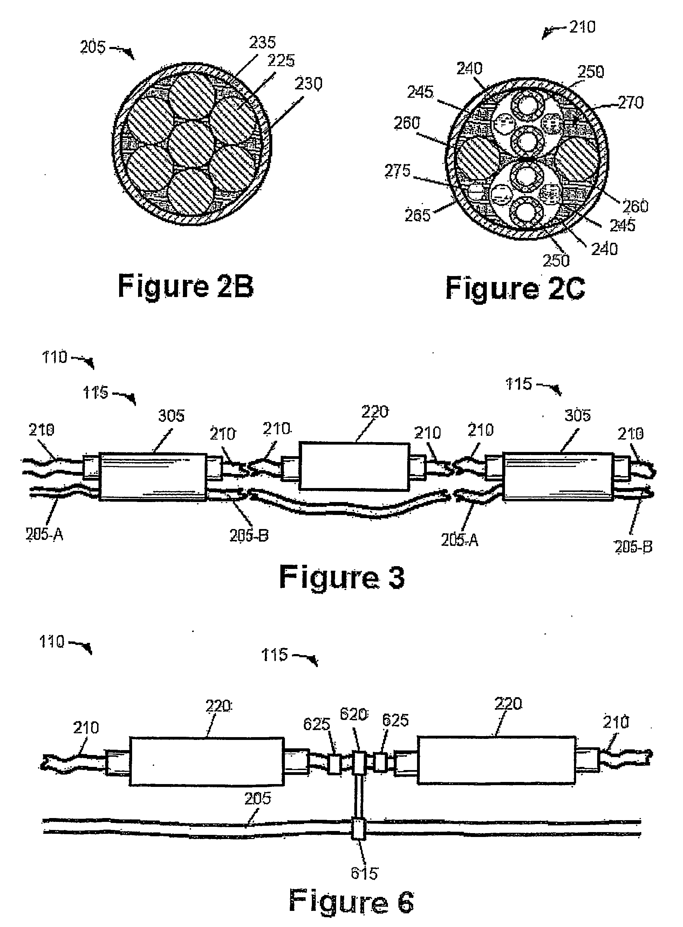

   · **FIG. 2B** illustrates the support cable of **FIG. 2A** cross-sectioned along line 2B-2B in **FIG. 2A**; and
   · **FIG. 2C** illustrates the signal cable of **FIG. 2A** cross-sectioned along line 2C-2C in **FIG. 2A**;
**FIG. 3** illustrates a partial view of the seismic cable of **FIG. 1**, in accordance with one particular embodiment of the present invention in which the support and signal cables are attached by the electronics modules;

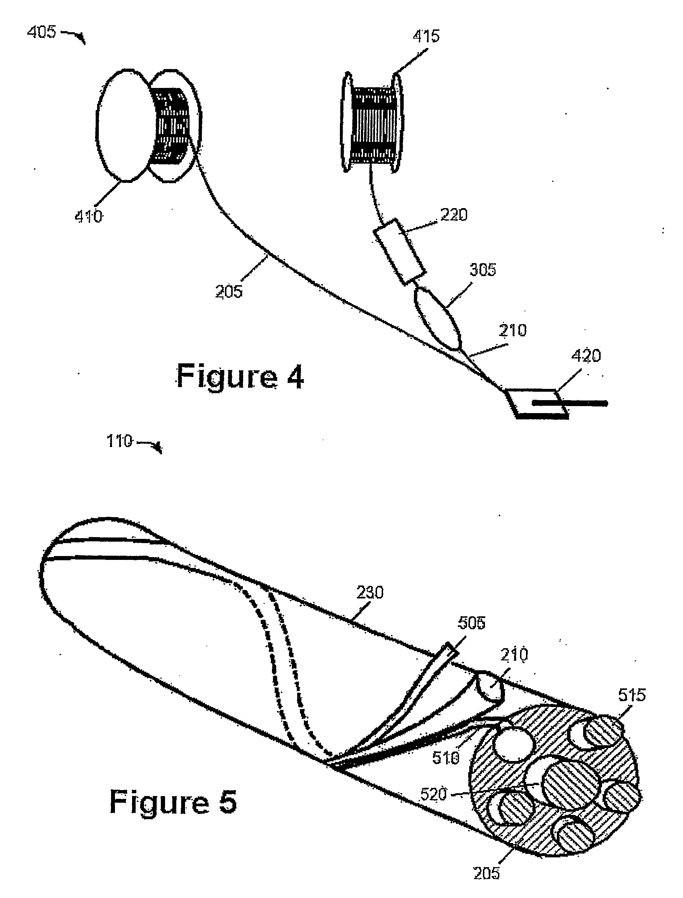

**FIG. 4** illustrates a storage and deployment mechanism for the seismic cable of **FIG. 1**, in accordance with a second embodiment alternative to that in **FIG. 3** in which the support and signal cables are joined by a zipper mechanism;
**FIG. 5** illustrates a partial, perspective, cross-sectioned view of the seismic cable of **FIG.1**, in accordance with a third embodiment alternative to those in **FIG. 3** and in **FIG. 4** in which the support and signal cables are fabricated together and then separated by a rip-cord;
**FIG. 6** illustrates a partial plan view of the seismic cable of **FIG. 1**, in accordance with a fourth embodiment in which the support cable and the signal cable are attached by a rigid arm; and

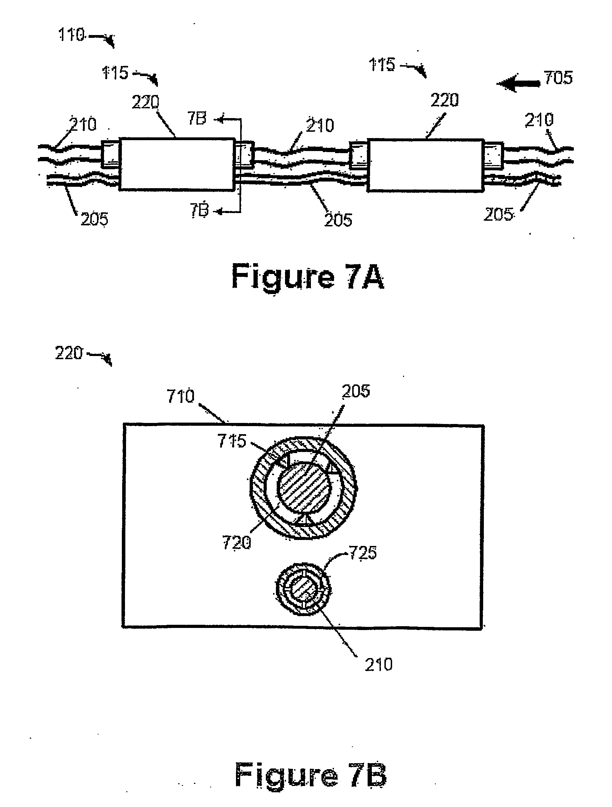

**FIG. 7A** and **FIG. 7B** illustrate a fifth embodiment in a side, plan view and in an end, partially sectioned view (along line 7B-7B), respectively, which the support and signal cables are attached by the housings of the sensor modules.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

**FIG. 1** illustrates a seismic survey system 100 in which a seismic survey vessel 105 has deployed a seismic cable 110 to the bed 115 from the surface 120 of a body of water 125. In the illustrated embodiment, the body of water 125 is part of an ocean. Consequently, the bed 115 is a seabed (or, ocean floor). However, the invention is not so limited, as the invention may used for surveys conducted in fresh and brackish waters.

**FIG. 2A** illustrates a seismic cable 110 in accordance with one embodiment of the present invention. The seismic cable 110 comprises a support cable 205 and a signal cable 210 attached to the support cable 205 at a plurality of points 215 spaced along the length thereof. In the illustrated embodiment, the signal cable 210 further comprises a plurality of sensor modules 220, which will be discussed further below. In one embodiment, the spacing of the points 215 is approximately proportional to a length of the sensor modules 220 so that the points 215 are located between each of the sensor modules 220. However, the present invention is not so limited. In alternative embodiments, the points 215 may be located at any desirable location. For example, the points 215 may be located between every other sensor module 220 or between successive pluralities of sensor modules 220. For another example, a plurality of points 215 may be located between each pair of sensor modules 220.

As is shown in **FIG. 2B**, the support cable 205 includes one or more stress members 225 (only one indicated) providing tension to the seismic cable 110. The stress members 225 may be any type of stress member known to the art for handling tension in seismic cables. Examples of suitable stress members 225 include, but are not limited to, steel wire and utility cable. If more than one stress member 225 is employed, as in the illustrated embodiment, the stress members 225 may be cabled together in any suitable fashion known to the art. For instance, in the illustrated embodiment, the stress members 225 are jacketed together, *i.e*., cabled together by enclosure in a jacket 230. Furthermore, in some embodiments, the support cable 205 may be filled with a filler 235 to, e.g., help protect against water intrusion. The filler 235 may be of any suitable type known to the art.

As is shown in **FIG. 2C****,** the signal cable 210 comprises, *inter alia*, a plurality of signal leads 240, and, in the illustrated embodiment, one or more power leads 260. The signal leads 240 may include electrical leads 245 such as a twisted wire pair of leads, a coaxial cable, and the like. The signal lead 240 may also include one or more optical fibers 250. As with the support cable 205, these elements may be cabled together in any suitable fashion known to the art. For instance, in the illustrated embodiment, the leads 240, 245, 250, 260 are jacketed together, *i.e*., cabled together by enclosure in a jacket 265. Furthermore, in some embodiments, the signal cable 210 may be filled with a filler 270 to, *e*.*g*., help protect against water intrusion. The filler 270 may be of any suitable type known to the art. In the illustrated embodiment, the signal cable 210 also includes a stress member 275 for providing extra support on forces exerted against the signal cable 210, although the invention is not so limited. In alternative embodiments, the signal cable 210 may not include the stress member 275 or may include a plurality of stress members 275.

Returning to **FIG. 2A**, the signal cable 210, in the illustrated embodiment, further comprises one or more sensor modules 220. The sensor module 220 includes one or more sensors (not shown). Examples of sensors include, but are not limited to, geophones, accelerometers, hydrophones, tilt meters, and magnetometers.

These sensors generate data in the course of survey operations and transmit that data over the signal cable 210 in a conventional manner. The sensors may include electronics for conditioning the signal and/or digitizing it. The sensor module 220 is typically connected to the signal cable 210 by one or more the sensor leads 240, 245, 250, 260 shown in Figure 2C. Note that the composition of sensors in each sensor module 220 may be the same or may be unique, depending on the implementation. To some degree, the choice of sensors may influence the number and implementation of the signal and power leads (*e*.*g*., the leads 240, 245, 250, 260 in **FIG. 2C**).

The data from the sensors may be transmitted to one or more electronics modules (not shown in **FIG. 2A**) located along the seismic cable 110 or between cable sections. The electronics module is connected to the signal cable 210 by one or more of the signal leads (*e.g*., the signal leads 240, 245, 250, 260 in **FIG. 2C**) of the signal cable. Alternatively, the functionality of the electronics module may reside in one or more of the sensor modules 220 in some alternative embodiments. The electronics module serves as a data transmission and power hub for the sensor modules 220. In one embodiment, the electronics module may comprise a high bandwidth bus capable of transmitting data between other electronics modules and to a computer or other computing device (not shown) on the seismic survey vessel 105 or at a remote location. In an alternative embodiment, the sensor module 220 may be connected to the signal cable 210 by a data bus (not shown). Regardless, one important function of the electronics module is to collect and forward the data generated and transmitted by the sensor modules.

In one embodiment, the sensor module 220 is sufficiently sealed to protect against water intrusion and physical damage. However, in alternative embodiments, the seismic cable 110 may be enclosed by a sheath, or protective outer covering (not shown). In embodiments wherein the support cable 205 includes leads, the support cable 205 may also be enclosed by a sheath (not shown). The sheath protects sensitive electronics such as the signal cable 210 and sensor module 220 from water intrusion and physical damage. The protective outer covering can be any skin, jacket, or extrusion matrix known in conventional practice.

Although the support cable 205 bypasses the sensor module 220 as illustrated in **FIG. 2A**, in an alternative embodiment, a groove can be provided in the sensor module 220 such that the support cable 205 passes through the sensor module 220 via the groove. The support cable 205 can be acoustically decoupled from the sensor module 220 by one or more acoustic decoupling devices (not shown) between the groove and the support cable 205, such as springs or elastic devices, as will be discussed further below.

As was mentioned above, the signal cable 210 is attached to the support cable 205 at a plurality of points 215, shown generically in **FIG. 2A**. The invention admits wide variation in how this attachment may be accomplished, and may employ virtually any suitable attachment mechanism. **FIG. 3** **-** **FIG. 6** each illustrate various alternative embodiment employing and implementing different attachment mechanisms. More particularly:
· **FIG. 3** illustrates an embodiment in which the attachment is made through electronics modules 305 being connected to both a signal cable 210 and a support cable 205-A;
· **FIG. 4** illustrates the deployment of an embodiment in which the attachment is made through a zipper mechanism;
· **FIG. 5** illustrates an embodiment in which the support cable 205 and the signal cable 210 are separated after fabrication by a rip-cord 505; and
· **FIG. 6** illustrates an embodiment in which the attachment is made by a rigid arm 610.
Each of these alternative embodiments shall now be discussed more fully in turn.

**FIG. 3** illustrates one embodiment of the seismic cable 110, in which an electronics module 305 separating two support cable sections referred in **FIG. 3** as a left support cable section 205-A and a right support cable section 205-B section. As mentioned, the electronics module 305 is placed at intervals along the seismic cable 110 of **FIG. 1** and **FIG. 2A** and is generally placed between the support cable sections 205-A, 205-B.

As illustrated in **FIG. 3**, the signal cable 210 is directly connected to the electronics module 305. In one embodiment, the left support cable section 205-A terminates on one side of the electronics module 305 and begins anew at the right support cable 205-B at another side of the electronics module 305. In an alternative embodiment, the support cable sections 205-A, 205-B pass through the electronic module 305.

Although not illustrated in **FIG. 3**, it should be appreciated that at least of a portion the support cable sections 205-A, 205-B and signal cable 210 may be connected by some other attachment mechanism in addition to the attachment provided at the sensor module 305. For instance, the embodiment of **FIG. 3** might also employ the rigid or semi-rigid arm 610 in **FIG. 6**, discussed more fully below. Thus, some embodiments might use several different types of attachment mechanisms.

**FIG. 4** illustrates an embodiment of the seismic cable 110 in **FIG.1** alternative to that of **FIG. 3**. A storage and deployment mechanism 405 is shown, which stores a continuous length of support cable 205 in a support cable storage 410 and a continuous length of signal cable 210 in a signal cable storage 415. As mentioned, the sensor module 220 and the electronics module 305 are directly connected to the signal cable 210 and are stored along with the signal cable 210 in the signal cable storage 415. It should be appreciated that although the support cable storage 410 and the signal cable storage 415 are illustrated in a common "spool" configuration, any method of storing a continuous length of cable known in conventional practice may be used.

The support cable 205 and the signal cable 210 are attached at one end by a zipper mechanism 420. As the support cable 205 is deployed from the support cable storage 410 and signal cable 210 is removed from signal cable storage 415, the zipper mechanism 420 is guided in the direction of the spools 410, 415, thereby automatically attaching the support cable 205 with the signal cable 210. The zipper mechanism 420 can be any mechanism known in the art for automatically clamping two members in a zipping fashion. For example, the zipper mechanism 420 may comprise a plurality of clamps that are individually operated to attach the support cable 205 with the signal cable 210. The plurality of clamps may be located on the support cable 205, the signal cable 210, or both. Another example of the zipper mechanism is a Velcro-based solution. Yet another example of a zipper mechanism is strong thread that attaches the signal cable to the support cable by sowing, wrapping or knitting.

Because the sensor module 220 and the electronics module 305 are attached to the signal cable 210 without tension, the signal cable 210 will be subjected to relatively gentler handling. Furthermore, this embodiment of the seismic cable 110 allows for greater operation depth and easier handling in adverse weather. The design also allows easier and faster replacement of component parts in the seismic cable 110. Still further, because the signal cable 210 and support cable 205 can be stored without tension, less space is needed in the signal cable storage 415 and the support cable storage 410, respectively. One important feature of this arrangement is that the signal cable 210 is handled and stored with virtually no tension. This creates an opportunity for the cable designer to avoid certain conflicting requirements like cable strength vs. unwanted inter-cable acoustic coupling.

Note that, in some embodiments, the electronics module can be carried as part of the support cable 205, as opposed to the signal cable 210. In such an embodiment, the support cable 205 comprises one or more electronics modules 305 (first shown in **FIG. 3**) connected to one or more leads in the support cable 205. The leads may be electrical or optical, depending on their purpose and the particular embodiment. The leads may be for transmitting data and power for the operation of the electronics modules 305. For instance, signal leads (*e*.*g*. the signal leads 240 shown in Figure 2C) may be used to transmit data from the electronics modules 305 to, *e*.*g*., a computing device (not shown) located on the seismic survey vessel 105 (first shown in **FIG. 1**) or at the remote location. Similarly, leads may be employed for transmitting power from the survey vessel 105 to the electronics modules 305.

One example of such a seismic cable 110 is illustrated in **FIG. 5****.** The support cable 205 and the signal cable 210 are manufactured together in one continuous unit and substantially enclosed by the protective outer covering 230. The signal cable 210 can be detached over short sections where the sensor modules (not shown in **FIG. 5**) are desired by pulling a rip-cord 505. Detaching the signal cable 210 from the seismic cable 110 leaves an empty groove 510. If the outer covering 230 is comprised of a thermoplastic, the rip-cord 505 can be heated by electrical current, for example, to ease pulling the rip-cord 510. Once the signal cable 210 is detached, it can be terminated and connected to the sensor module 220. The support cable 205, in the embodiment of **FIG. 6**, includes several signal leads 515 (only one indicated) over which control and data signals may be transmitted and a power lead 520 over which the electronic modules 320 may be powered.

**FIG. 6** illustrates an alternative embodiment of the attachment mechanism 215 of **FIG. 2A**. Arm 610 separates the support cable 205 from the signal cable 210 at a sufficient distance such that the support cable 205 and the signal cable 210 do not contact during deployment. In alternative embodiments, the arm 610 may be rigid or semi-rigid. A semi-rigid arm 610 will flex along the direction of the signal cable 210 but be rigid in the direction of rotation about the signal cable 210. The arm 610 is attached to the support cable 205 by a clamp 615. The arm 610 should generally be attached loosely to the signal cable 210 such that excess torsion is not introduced into the signal cable 210. For example, as illustrated in **FIG. 6****,** the arm 610 is attached to the signal cable 210 by a bearing 620 that allows the signal cable 210 to rotate freely around the signal cable 210 and move axially between two stop clamps 625.

**FIG. 7A** and **FIG. 7B** illustrate another alternative embodiment in which the support cable 205 and the signal cable 210 are attached by the housings of the sensor modules 220 themselves. The view in **FIG. 7B** is from the direction of the arrow 705 in **FIG. 7A** and sectioned along the line 7B-7B in **FIG. 7A****.** As was alluded to earlier, the support cable 205 is acoustically decoupled from the housing 710 of the sensor module 220 by a plurality of elastic devices 715 (only one indicated), such as springs, as is shown in **FIG. 7B**. In some alternative embodiments, the elastic devices 715 may be omitted. Note that a plurality of electrical connections 725 (only one indicated) are conceptually illustrated between the signal cable 210 and the sensor module 220.

The elastic devices 715 are positioned between the support cable 705 and the sensor housing 710 in the groove 720 defined by the sensor housing 710 and through which the support cable 205 runs. Such decoupling techniques are known to the art, and one is more fully disclosed in International Patent WO0214905, published February 21, 2002, in the name of James Martin, Nicolas Goujon, Frederik Naes, and Rune Voldsbekk, and entitled "A HOUSING FOR A SEISMIC SENSING ELEMENT AND A SEISMIC SENSOR." However, other techniques may also be employed in alternative embodiments. For instance, some embodiments, the support cable is decoupled from the sensor housing 710 by being permitted to slide freely through the groove 720 relative to the sensor module 220.

The present invention facilitates acoustic decoupling of the sensor modules 220-and, hence, the sensors-from the stress member 205, which is rigid and under tension, and therefore improves the data quality recorded by the system 100. The various embodiments described herein provide a robust cable 110 capable of being subjected to rough handling when the cable 110 is deployed and/or retrieved. The robust cable 110 is further capable of being subjected to great water depth and pressure. Although the cable 110 is substantially robust, the cable 110 delivers higher data quality than previous cables. More particularly, in its various aspects and embodiments, the invention provides the following advantages over the state of the art:
· higher reliability of the connections to the sensor modules 220, as takeouts are eliminated;
· reduced number of connections;
· increased cable strength as terminations of the stress member 205 are eliminated;
· improved sensor-to-ground coupling due to the smaller and lighter sensor module 220;
· more precise data recording independent of how the sensor module 220 rests on the seafloor due to axial symmetry of the cable 110 and sensor module 220;
· mechanical decoupling between the sensor module 220 and the support cable, thus freeing the sensor module 220 from the stresses on the stress member 205 and improving data quality;
· high data quality independent of water depth;
· higher possibility for the same axial symmetry for the cable 110 as for the sensor module 220 and for positioning the sensor module 220 closer to the center of gravity of the sensor module 220-thereby providing consistent and repeatable independent of how the sensor module 220 lies on the seafloor;
· higher modularity of cable construction providing increased reparability, reconfiguration possibilities, improved depth-appropriate assembly, and even the possibility of omitting stress carrying support for shallow water operations;
· easier handling procedures, as the stress member 205 and the signal cable 210 can be separated for storage and shipping; and
· safer handling for components since the sensor module 220 can be stored separately from the stress member 205, thereby reducing danger to the sensor module 220 from tension on the stress member 205.
Note that not all of these advantages will be realized in every embodiment of the invention. Still other advantages may become apparent to those skilled in the art having the benefit of this disclosure.

This concludes the detailed description. The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A seismic cable (110), comprising:
a tension support cable (205) capable of absorbing tension during deployment of the seismic cable (110);
a signal cable (210) attached to the support cable (205) at a plurality of first points (215), the first points being spaced along the length of the support cable (205) and being spaced along the length of the signal cable (210); and
one or more sensor modules (220) disposed on the signal cable (210) at one or more second points, said second points being different from the plurality of first points (215), the or each second point being between a pair of the first points (215).

2. The seismic cable of claim 1, further comprising a first sheath enclosing the support cable (205) and the signal cable (210).

3. The seismic cable of claim 2, wherein the first sheath comprises at least one of a skin, a jacket or an extrusion matrix.

4. The seismic cable of claim 1, wherein the support cable (205) includes a plurality of strengthening members.

5. The seismic cable of claim 4, wherein the strengthening members are cabled by a second sheath.

6. The seismic cable of claim 1, wherein the support cable (205) includes at least one of a signal lead and a power lead.

7. The seismic cable of claim 6, further comprising an electronics module powered over the power lead and capable of transmitting data over the signal lead.

8. The seismic cable of claim 7, wherein the support cable (205) is sectioned.

9. The seismic cable of claim 1, wherein the signal cable (210) includes a plurality of leads cabled by a third sheath.

10. The seismic cable of claim 1, wherein the signal cable (210) includes at least one strengthening member.

11. The seismic cable of claim 1, further comprising a plurality of sensor modules (220) electrically connected to the signal cable (210).

12. The seismic cable of claim 1, wherein the sensor modules (220) transmit data and receive power over the signal cable (210).

13. The seismic cable of claim 1, further comprising:
a plurality of sensor modules (220) electrically connected to and distributed along the signal cable (210); and
a plurality of electronics modules (305) by which the signal cable (210) is attached to the support cable(205) at the plurality of first points.

14. The seismic cable of claim 1, wherein the electronics modules (305) are electrically connected to the signal cable (210) at the plurality of first points and mechanically connected to the support cable (205).

15. The seismic cable of claim 1, wherein the signal cable (210) is attached to the support cable (205) by a zipper mechanism (420).

16. The seismic cable of claim 1, wherein the plurality of first points are spaced along the length of the signal cable (210) in proportion to a length of the sensor module (220).

17. The seismic cable of claim 16, wherein each of the plurality of first points is positioned between an adjacent pair of sensor modules (220).

18. The seismic cable of claim 16, wherein at least one separation can be created by pulling a rip cord (515) fabricated in the seismic cable to detach the signal cable (210) from the support cable (205).

19. The seismic cable of claim 1, further comprising a plurality of arms (610) mechanically affixed to the support cable (205) and rotationally connected to the signal cable (210) to attach the signal cable (210) to the support cable (205) at the plurality of first points.

20. The seismic cable of claim 19, wherein the arms (610) are either rigid arms or semi-rigid arms.

21. The seismic cable of claim 19, wherein the arms (610) are mechanically fixed by a plurality of clamps (615).

22. The seismic cable of claim 19, wherein the arms (610) are rotationally connected by a bearing (620).

23. The seismic cable of claim 19, further comprising a plurality of stops (625) restraining movement of the rotational connection along the length of the signal cable (210).

24. The seismic cable of claim 1, further comprising a plurality of sensor modules (220) electrically connected to and distributed along the signal cable and by which the support cable (205) and the signal cable are joined.

25. The seismic cable of 24, wherein the support cable (205) passes through a groove (720) in the sensor modules (220).

26. The seismic cable of claim 1, wherein each of the sensor modules (220) comprises a housing (710) defining a groove (720) therethrough through which the support cable (205) runs.

27. The seismic cable of claim 26, wherein the support cable (205) is acoustically decoupled from the housing by a plurality of elastic devices (715).

28. The seismic cable of claim 26, wherein the support cable (205) is acoustically decoupled from the housing (710) by freely moving through the groove (720) relative to the sensor module.

29. A method of assembling a seismic cable (110), comprising attaching a tension support cable (205) capable of absorbing tension during deployment of the seismic cable (110) to a signal cable (210) at a plurality of first points (215), the first points (215) being spaced along the length of the support cable (205) and being spaced along the length of the signal cable (210), the plurality of first points differing from one or more second points of attachment for one or more sensor modules (220), the or each second point being between a pair of the first points (215).

30. The method of claim 29, wherein attaching the support cable (205) to the signal cable (210) includes mechanically connecting an electronics module (305) to the support cable (205) and electrically connecting the electronics module to the signal cable (210).

31. The method of claim 29, wherein attaching the support cable (205) to the signal cable includes zipping the signal cable (210) to the support cable (205) at the first points.

32. The method of claim 29, wherein attaching the support cable (205) to the signal cable (210) includes separating the support cable (205) and the signal cable (210) between the plurality of first points.

33. The method of claim 32, wherein separating the support cable (205) and the signal cable (210) includes pulling a rip-cord (515).

34. The method of claim 29, wherein attaching the support cable (205) to the sensor includes mechanically affixing either a rigid arm (610) or a semi-rigid arm (610) to the support cable (205) and rotationally connecting the respective rigid or semi-rigid arm (610) to the signal cable (210) at each of the plurality of first points.

35. The method of claim 29, wherein attaching the support cable to the signal cable (210) includes connecting the support cable (205) to the signal cable (210) by a plurality of electronics modules (305).

## Patentansprüche

1. Seismisches Kabel (110), umfassend:
ein Abspannträgerkabel (205), das imstande ist, Zugspannung während der Verlegung des seismischen Kabels (110) zu absorbieren;
ein Signalkabel (210), das am Trägerkabel (205) an einer Vielzahl von ersten Punkten (215) angebracht ist, wobei die ersten Punkte entlang der Länge des Trägerkabels (205) beabstandet sind und entlang der Länge des Signalkabels (210) beabstandet sind; und
ein oder mehrere Sensormodule (220), die am Signalkabel (210) an einem oder mehreren zweiten Punkten angeordnet sind, wobei die zweiten Punkte sich von der Vielzahl von ersten Punkten (215) unterscheiden, wobei der oder jeder zweite Punkt zwischen einem Paar der ersten Punkte (215) liegt.

2. Seismisches Kabel nach Anspruch 1, ferner umfassend eine erste Hülle, die das Trägerkabel (205) und das Signalkabel (210) umschließt.

3. Seismisches Kabel nach Anspruch 2, wobei die erste Hülle mindestens eines von folgendem umfaßt: eine Haut, einen Mantel oder eine Strangpreßmatrix.

4. Seismisches Kabel nach Anspruch 1, wobei das Trägerkabel (205) eine Vielzahl von Verstärkungsteilen aufweist.

5. Seismisches Kabel nach Anspruch 4, wobei die Verstärkungsteile mit einer zweiten Hülle verkabelt sind.

6. Seismisches Kabel nach Anspruch 1, wobei das Trägerkabel (205) mindestens eines von folgendem aufweist: eine Signalanschlußleitung und eine Stromanschlußleitung.

7. Seismisches Kabel nach Anspruch 6, ferner umfassend ein Elektronikmodul, das über die Stromanschlußleitung mit Strom versorgt wird und imstande ist, Daten über die Signalanschlußleitung zu senden.

8. Seismisches Kabel nach Anspruch 7, wobei das Trägerkabel (205) in Stücke unterteilt ist.

9. Seismisches Kabel nach Anspruch 1, wobei das Signalkabel (210) eine Vielzahl von Anschlußleitungen aufweist, die mit einer dritten Hülle verkabelt sind.

10. Seismisches Kabel nach Anspruch 1, wobei das Signalkabel (210) mindestens ein Verstärkungsteil aufweist.

11. Seismisches Kabel nach Anspruch 1, ferner umfassend eine Vielzahl von Sensormodulen (220), die mit dem Signalkabel (210) elektrisch verbunden sind.

12. Seismisches Kabel nach Anspruch 1, wobei die Sensormodule (220) über das Signalkabel (210) Daten senden und Strom empfangen.

13. Seismisches Kabel nach Anspruch 1, ferner umfassend:
ein oder mehrere Sensormodule (220), die mit dem Signalkabel (210) elektrisch verbunden und entlang desselben verteilt sind; und
eine Vielzahl von Elektronikmodulen (305), durch die das Signalkabel (210) an der Vielzahl von ersten Punkten am Trägerkabel (205) angebracht ist.

14. Seismisches Kabel nach Anspruch 1, wobei die Elektronikmodule (305) mit dem Signalkabel (210) an der Vielzahl von ersten Punkten elektrisch verbunden und mit dem Trägerkabel (205) mechanisch verbunden sind.

15. Seismisches Kabel nach Anspruch 1, wobei das Signalkabel (210) am Trägerkabel (205) durch einen Reißverschlußmechanismus (420) angebracht ist.

16. Seismisches Kabel nach Anspruch 1, wobei die Vielzahl von ersten Punkten proportional zu einer Länge des Sensormoduls (220) entlang der Länge des Signalkabels (210) beabstandet ist.

17. Seismisches Kabel nach Anspruch 16, wobei jeder aus der Vielzahl von ersten Punkten zwischen einem benachbarten Paar von Sensormodulen (220) positioniert ist.

18. Seismisches Kabel nach Anspruch 16, wobei mindestens eine Trennung durch Ziehen einer im seismischen Kabel angefertigten Aufziehleine (515) erzeugt werden kann, um das Signalkabel (210) vom Trägerkabel (205) zu lösen.

19. Seismisches Kabel nach Anspruch 1, ferner umfassend eine Vielzahl von Armen (610), die am Trägerkabel (205) mechanisch befestigt und mit dem Signalkabel (210) drehbar verbunden sind, um das Signalkabel (210) am Trägerkabel (205) an der Vielzahl von ersten Punkten anzubringen.

20. Seismisches Kabel nach Anspruch 19, wobei die Arme (610) entweder starre Arme oder halbstarre Arme sind.

21. Seismisches Kabel nach Anspruch 19, wobei die Arme (610) durch eine Vielzahl von Klemmeinrichtungen (615) mechanisch befestigt sind.

22. Seismisches Kabel nach Anspruch 19, wobei die Arme (610) durch ein Lager (620) drehbar verbunden sind.

23. Seismisches Kabel nach Anspruch 19, ferner umfassend eine Vielzahl von Anschlägen (625), welche eine Bewegung der drehbaren Verbindung entlang der Länge des Signalkabels (210) einschränken.

24. Seismisches Kabel nach Anspruch 1, ferner umfassend eine Vielzahl von Sensormodulen (220), die mit dem Signalkabel elektrisch verbunden und entlang desselben verteilt sind und durch die das Trägerkabel (205) und das Signalkabel zusammengefügt werden.

25. Seismisches Kabel nach Anspruch 24, wobei das Trägerkabel (205) durch eine Rille (720) in den Sensormodulen (220) läuft.

26. Seismisches Kabel nach Anspruch 1, wobei jedes der Sensormodule (220) ein Gehäuse (710) umfaßt, das eine Rille (720) definiert, durch die das Trägerkabel (205) läuft.

27. Seismisches Kabel nach Anspruch 26, wobei das Trägerkabel (205) vom Gehäuse durch eine Vielzahl von elastischen Vorrichtungen (715) akustisch entkoppelt ist.

28. Seismisches Kabel nach Anspruch 26, wobei das Trägerkabel (205) vom Gehäuse (710) durch freie Bewegung durch die Rille (720) relativ zum Sensormodul akustisch entkoppelt ist.

29. Verfahren zum Zusammensetzen eines seismischen Kabels (110), umfassend: Anbringen eines Abspannträgerkabels (205), das imstande ist, Zugspannung während der Verlegung des seismischen Kabels (110) zu absorbieren, an einem Signalkabel (210) an einer Vielzahl von ersten Punkten (215), wobei die ersten Punkte entlang der Länge des Trägerkabels (205) beabstandet sind und entlang der Länge des Signalkabels (210) beabstandet sind, wobei sich die Vielzahl von ersten Punkten von einem oder mehreren zweiten Punkten der Anbringung für ein oder mehrere Sensormodule (220) unterscheiden, wobei der oder jeder zweite Punkt zwischen einem Paar der ersten Punkte (215) liegt.

30. Verfahren nach Anspruch 29, wobei das Anbringen des Trägerkabels (205) am Signalkabel (210) aufweist: mechanisches Verbinden eines Elektronikmoduls (305) am Trägerkabel (205) und elektrisches Verbinden des Elektronikmoduls mit dem Signalkabel (210).

31. Verfahren nach Anspruch 29, wobei das Anbringen des Trägerkabels (205) am Signalkabel aufweist: reißverschlußartiges Zusammenfügen des Signalkabels (210) mit dem Trägerkabel (205) an den ersten Punkten.

32. Verfahren nach Anspruch 29, wobei das Anbringen des Trägerkabels (205) am Signalkabel (210) aufweist: Trennen des Trägerkabels (205) und des Signalkabels (210) zwischen der Vielzahl von ersten Punkten.

33. Verfahren nach Anspruch 32, wobei das Trennen des Trägerkabels (205) und des Signalkabels (210) aufweist: Ziehen einer Aufziehleine (515).

34. Verfahren nach Anspruch 29, wobei das Anbringen des Trägerkabels (205) am Sensor aufweist: mechanisches Befestigen entweder eines starren Arms (610) oder eines halbstarren Arms (610) am Trägerkabel (205) und drehbares Verbinden des starren bzw. halbstarren Arms (610) am Signalkabel (210) an jedem aus der Vielzahl von ersten Punkten.

35. Verfahren nach Anspruch 29, wobei das Anbringen des Trägerkabels (205) am Signalkabel (210) aufweist: Verbinden des Trägerkabels (205) mit dem Signalkabel (210) durch eine Vielzahl von Elektronikmodulen (305).

## Revendications

1. Câble sismique (110) comprenant :
un câble support de tension (205) capable d'absorber une tension au cours du déploiement du câble sismique (110) ;
un câble de signal (210) fixé au câble support (205) en une pluralité de premiers points (215), les premiers points étant espacés sur la longueur du câble support (205) et étant espacés sur la longueur du câble de signal (210) ; et
un ou plusieurs modules de détecteur (220) disposés sur le câble de signal (210) en un ou plusieurs seconds points, lesdits seconds points étant différents de la pluralité des premiers points (215), le ou chaque second point étant situé entre une paire des premiers points (215).

2. Câble sismique selon la revendication 1, comprenant en outre une première gaine entourant le câble support (205) et le câble de signal (210).

3. Câble sismique selon la revendication 2, dans lequel la première gaine comprend au moins un revêtement, une chemise ou une matrice d'extrusion.

4. Câble sismique selon la revendication 1, dans lequel le câble support (205) comprend une pluralité d'éléments de renforcement.

5. Câble sismique selon la revendication 4, dans lequel les éléments de renforcement sont câblés par une deuxième gaine.

6. Câble sismique selon la revendication 1, dans lequel le câble support (205) comprend au moins un conducteur de signal et un conducteur de courant.

7. Câble sismique selon la revendication 6, comprenant en outre un module électronique alimenté par le conducteur de courant et capable de transmettre des données sur le conducteur de signal.

8. Câble sismique selon la revendication 7, dans lequel le câble support (205) est sectionné.

9. Câble sismique selon la revendication 1, dans lequel le câble de signal (210) comprend une pluralité de conducteurs câblés par une troisième gaine.

10. Câble sismique selon la revendication 1, dans lequel le câble de signal (210) comprend au moins un élément de renforcement.

11. Câble sismique selon la revendication 1, comprenant en outre une pluralité de modules de détecteur (220) électriquement connectés au câble de signal (210).

12. Câble sismique selon la revendication 1, dans lequel les modules de détecteur (220) transmettent des données et reçoivent du courant sur le câble de signal (210).

13. Câble sismique selon la revendication 1, comprenant en outre :
une pluralité de modules de détecteur (220) électriquement connectés au câble de signal et distribués le long du câble de signal (210) ; et
une pluralité de modules électroniques (305) par lesquels le câble de signal (210) est fixé au câble support (205) au niveau de la pluralité de premiers points.

14. Câble sismique selon la revendication 1, dans lequel les modules électroniques (305) sont électriquement connectés au câble de signal (210) au niveau de la pluralité de premiers points et mécaniquement connectés au câble support (205).

15. Câble sismique selon la revendication 1, dans lequel le câble de signal (210) est fixé au câble support (205) par un mécanisme de glissière (420).

16. Câble sismique selon la revendication 1, dans lequel la pluralité de premiers points sont espacés le long du câble de signal (210) proportionnellement à une longueur du module de détecteur (220).

17. Câble sismique selon la revendication 16, dans lequel chacun de la pluralité de premiers points est positionné entre une paire adjacente de modules de détecteur (220).

18. Câble sismique selon la revendication 16, dans lequel au moins une séparation peut être créée en tirant un fil de déchirement (515) fabriqué dans le câble sismique afin de détacher le câble de signal (210) du câble support (205).

19. Câble sismique selon la revendication 1, comprenant en outre une pluralité de bras (610) mécaniquement fixés au câble support (205) et connectés de manière rotative au câble de signal (210) pour fixer le câble de signal (210) au câble support (205) au niveau de la pluralité de premiers points.

20. Câble sismique selon la revendication 19, dans lequel les bras (610) sont soit des bras rigides, soit des bras semi-rigides.

21. Câble sismique selon la revendication 19, dans lequel les bras (610) sont fixés mécaniquement par une pluralité de colliers (615).

22. Câble sismique selon la revendication 19, dans lequel les bras (610) sont fixés de manière rotative par un palier (620).

23. Câble sismique selon la revendication 19, comprenant en outre une pluralité de butées (625) limitant le mouvement de la connexion rotative le long du câble de signal (210).

24. Câble sismique selon la revendication 1, comprenant en outre une pluralité de modules de détecteur (220) électriquement connectés au câble de signal et distribués le long du câble de signal, et au moyen desquels le câble support (205) et le câble de signal sont joints.

25. Câble sismique selon la revendication 24, dans lequel le câble support (205) traverse une rainure (720) dans les modules de détecteur (220).

26. Câble sismique selon la revendication 1, dans lequel chacun des modules de détecteur (220) comprend un logement (710) définissant une rainure (720) à travers celui-ci à travers laquelle passe le câble support (205).

27. Câble sismique selon la revendication 26, dans lequel le câble support (205) est acoustiquement découplé du logement par une pluralité de dispositifs élastiques (715).

28. Câble sismique selon la revendication 26, dans lequel le câble support (205) est acoustiquement découplé du logement (710) par le fait qu'il peut se déplacer librement à travers la rainure (720) par rapport au module de détecteur.

29. Procédé d'assemblage d'un câble sismique (110), comprenant de fixer un câble support de tension (205) capable d'absorber une tension au cours du déploiement du câble sismique (110) à un câble de signal (210) en une pluralité de premiers points (215), les premiers points (215) étant espacés sur la longueur du câble support (205) et étant espacés sur la longueur du câble de signal (210), la pluralité de premiers points différant du ou des seconds points de fixation pour un ou plusieurs modules de détecteur (220), le ou chaque second point étant situé entre une paire des premiers points (215).

30. Procédé selon la revendication 29, dans lequel la fixation du câble support (205) au câble de signal (210) comprend de connecter mécaniquement un module électronique (305) au câble support (205) et de connecter électriquement le module électronique au câble de signal (210).

31. Procédé selon la revendication 29, dans lequel la fixation du câble support (205) au câble de signal comprend de fixer par une glissière le câble de signal (210) au câble support (205) au niveau des premiers points.

32. Procédé selon la revendication 29, dans lequel la fixation du câble support (205) au câble de signal (210) comprend de séparer le câble support (205) et le câble de signal (210) entre la pluralité de premiers points.

33. Procédé selon la revendication 32, dans lequel la séparation du câble support (205) et du câble de signal (210) comprend de tirer un fil de déchirement (515).

34. Procédé selon la revendication 29, dans lequel la fixation du câble support (205) au détecteur comprend de fixer mécaniquement soit un bras rigide (610), soit un bras semi-rigide (610) au câble support (205) et de connecter de manière rotative le bras respectif rigide ou semi-rigide (610) au câble de signal (210) au niveau de chacun de la pluralité des premiers points.

35. Procédé selon la revendication 29, dans lequel la fixation du câble support au câble de signal (210) comprend de connecter le câble support (205) au câble de signal (210) par une pluralité de modules électroniques (305).
